(19) Europäisches Patentamt

European Patent Office

Office européen des brevets

(11) Veröffentlichungsnummer: **0 355 534**
**A2**

(12) **EUROPÄISCHE PATENTANMELDUNG**

(21) Anmeldenummer: 89114472.7

(22) Anmeldetag: 04.08.89

(51) Int. Cl.4: **G11B 33/08**

(30) Priorität: 16.08.88 DE 8810371 U

(43) Veröffentlichungstag der Anmeldung:
28.02.90 Patentblatt 90/09

(84) Benannte Vertragsstaaten:
AT BE DE FR GB IT NL SE

(71) Anmelder: Siemens Aktiengesellschaft
Wittelsbacherplatz 2
D-8000 München 2(DE)

(72) Erfinder: Wojtas, Gerhard
Rosenstr. 32
D-7517 Waldbronn-Reichenbach(DE)
Erfinder: Trautwein, Rolf
Heinrich-Heine-Ring 2
D-7500 Karlsruhe(DE)

(54) **Elektronisches Gerät.**

(57) Die Erfindung betrifft ein elektronisches Gerät mit einem Laufwerkshalter (LH) zur Aufnahme von Speicherlaufwerken (SL). Bei elektronischen Geräten besteht bei Erschütterungen die Gefahr, daß der Schreib-/Lesekopf eines Speicherlaufwerkes zerstört wird. Diese Gefahr kann dadurch vermindert werden, daß das Speicherlaufwerk (SL) schwingend gelagert wird. Das erfindungsgemäße elektronische Gerät ermöglicht eine gleichmäßige Dämpfung nach allen möglichen Schwingungsrichtungen des Speicherlaufwerks (SL).
Die Erfindung wird angewandt in elektronischen Geräten, insbesondere in Personalcomputern.

## Elektronisches Gerät

Die Erfindung betrifft ein elektronisches Gerät gemäß dem Oberbegriff des Anspruchs 1.

Elektronische Geräte, z. B. Programmiergeräte für speicherprogrammierte Steuerungen oder Personalcomputer, sind mit Disketten- und Festplattenlaufwerken zur Aufnahme von Disketten und Festplatten ausgestattet, die zur Speicherung von Daten und Programmen bzw. Programmteilen dienen. Die Disketten- und Festplattenlaufwerke sind mit einem Laufwerkshalter im elektronischen Gerät montiert, wobei, je nach Hersteller, der Laufwerkshalter ein oder mehrere Disketten- bzw. Festplattenlaufwerke aufnehmen kann.

Um die Gefahr eines Datenverlustes auf der Diskette bzw. Festplatte oder sogar eine Zerstörung des Schreib-/Lesekopfes des Disketten- bzw. Festplattenlaufwerkes oder des Datenträgers zu mindern, werden insbesondere in der Prozeßautomatisierung die Disketten- bzw. Festplattenlaufwerke oder deren Laufwerkshalter schwingend gelagert.

Der vorliegenden Erfindung liegt die Aufgabe zugrunde, ein elektronisches Gerät der im Oberbegriff des Anspruchs 1 angegebenen Art zu schaffen, in dem Disketten- und Festplattenlaufwerke derart schwingend gelagert sind, daß nach allen möglichen Schwingungsrichtungen gleiches Dämpfungsverhalten erzielt wird.

Diese Aufgabe wird erfindungsgemäß durch die im kennzeichnenden Teil des Anspruchs 1 angegebenen Maßnahmen gelöst.

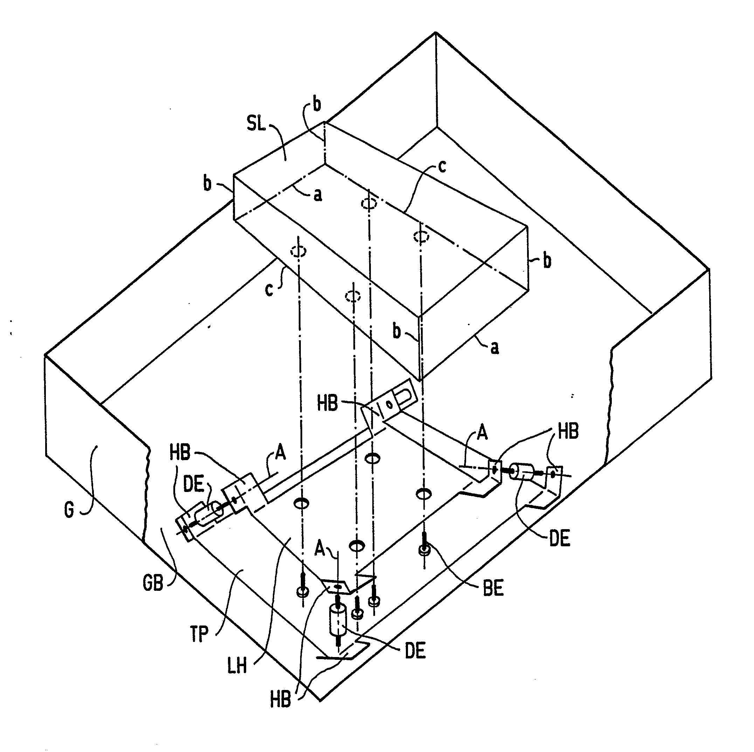

Anhand der Zeichnung, in der ein Ausführungsbeispiel veranschaulicht ist, werden die Erfindung, deren Ausgestaltung sowie Vorteile näher beschrieben.

Die Figur zeigt den Aufbau eines elektrischen Gehäuses mit einem Laufwerkshalter.

Mit G ist ein Gehäuse eines elektronischen Gerätes bezeichnet, auf dessen Gehäuseboden GB eine rechteckförmige Tragplatte TP mit hier nicht dargestellten Befestigungsschrauben angebracht ist. Ein Speicherlaufwerk SL mit quaderförmigem Gehäuse wird auf einen Laufwerkshalter LH mit Befestigungselementen BE montiert, wobei der Laufwerkshalter LH so ausgestaltet sein kann, daß mehrere Speicherlaufwerke, z. B. Festplatten- oder Diskettenlaufwerke, darauf befestigt werden können. Damit die Tragplatte TP leicht von dem Gehäuseboden GB gelöst werden kann, können die Befestigungen als Schlüsselloch-Befestigungen ausgebildet sein. Deren schlüssellochförmigen Aussparungen befinden sich zweckmäßig in der Tragplatte TP, während die Befestigungsschrauben im Gehäuseboden GB sitzen. Zum Einbauen der Tragplatte TP wird diese zunächst so auf den Gehäuseboden GB gesetzt, daß die Befestigungsschrauben durch die schlüssellochförmigen Aussparungen greifen. Nach Verschieben der Tragplatte TP in Richtung der Aussparungen sind sie nach Festziehen der Schrauben sicher befestigt. Erfindungsgemäß lagert der Laufwerkshalter LH derart auf der Tragplatte TP, daß zwischen Laufwerkshalter LH und Tragplatte TP Dämpfungselemente DE vorgesehen sind, deren Achsen A in Richtung des Gehäusedeckels des Speicherlaufwerks SL zeigen. Erfindungsgemäß bilden die Achsen A, die sich mit den Kanten a, b, c des Speicherlaufwerks SL in einem Punkt schneiden, mit diesen einen Winkel von gleichem Gradmaß. Dadurch wird ein gleichmäßiges Dämpfungsverhalten des Laufwerkshalters LH nach allen möglichen Schwingungsrichtungen erzielt. Vorteilhaft sind jeweils die vier Ecken der Tragplatte TP und des Laufwerkshalters LH mit Halteblechen HB ausgerüstet, die senkrecht zu den Dämpfungselementen DE angeordnet sind.

Dadurch wird erreicht, daß der Laufwerkshalter LH einfach auf die Tragplatte TP montiert werden kann. Es ist auch möglich, Haltebleche direkt auf dem Gehäuseboden GB anzubringen. Für diesen Fall kann auf die Tragplatte TP verzichtet werden.

### Ansprüche

1. Elektronisches Gerät mit einem schwingend gelagerten Laufwerkshalter (LH) zur Aufnahme von mindestens einem Speicherlaufwerk (SL) mit quaderförmigem Gehäuse, **dadurch gekennzeichnet, daß**

- der etwa rechteckige Laufwerkshalter (LH) mit Dämpfungselementen (DE) an seinen Ecken auf einer auf dem Gehäuseboden (GB) des Gerätes montierten Tragplatte (TP) befestigt ist und daß
- die Achsen der Dämpfungselemente (DE) gegen die Vertikale geneigt sind, derart, daß sie in Richtung des Laufwerksgehäuses gerichtet sind und mit dessen Kanten gleiche Winkel bilden.

2. Elektronisches Gerät nach Anspruch 1, **dadurch gekennzeichnet, daß**
- senkrecht zu den Dämpfungselementen (DE) angeordnete Haltebleche (HB) an der Tragplatte (TP) und an dem Laufwerkshalter (LH) vorgesehen sind.

89 P 4449 E